# EUROPEAN PATENT APPLICATION

(11) **EP 2 696 274 A2**
(43) Date of publication of application: **12.02.2014**
(21) Application number: 13179487.7
(22) Date of filing: 06.08.2013
(51) Int. Cl.: G06F 3/0488

(54) **Portable apparatus with a GUI and method of using the same**

(30) Priority: 07.08.2012 GB 201214055; 31.07.2013 KR 20130090797
(71) Applicant: Samsung Electronics Co., Ltd, Gyeonggi-do 443-742 (KR)
(72) Inventor: Steele, David, Staines, Middlesex TW184QE (GB); Hoikka, Kimmo, Staines, Middlesex TW184QE (GB); Amesbury, Paul, Staines, Middlesex TW184QE (GB)
(74) Representative: Nederlandsch Octrooibureau

(57) **Abstract**

A portable apparatus comprising a display screen, a processor, and an input device operable by a user of the portable apparatus. The processor is configured to control the display screen to display a graphical user interface comprising at least one object in a three dimensional (3D) space. The input device is configured to detect a user input and to provide an input signal to the processor. The processor is further configured to receive the input signal, to determine an input location within the display screen, to determine a direction of a rotation axis extending through a pivot point within the 3D space transverse to a line extending from the input location to the pivot point, and to cause the at least one object to rotate within the 3D space about the rotation axis. A graphical user interface suitable for being displayed by the portable apparatus and a method of operating a portable apparatus are also disclosed.

## Description

### BACKGROUND

### 1. Technical Field

The present disclosure relates generally to a mobile telephone or other similar apparatus (referred to herein generically as a portable apparatus) having a graphical user interface (GUI) that provides feedback in three dimensions and a method of using the same.

### 2. Description of the Related Art

A portable apparatus such as a mobile telephone or other portable devices may have a GUI that allows a user to interact with the portable apparatus. Conventional GUIs typically comprise a two dimensional (2D) arrangement of objects including text boxes, selection boxes, buttons, etc. Portable apparatuses frequently include a touchscreen for user input, for instance to select objects within a GUI. A touchscreen maximizes the usable size of the display screen by removing the need for a separate user input device and allows for more intuitive user input, since desired objects may be interacted with directly. However, it may be difficult for the user to confirm whether an object selected by touching the display screen has been correctly selected before the user's finger or other pointing device is removed from the screen. Even if the selected object changes color or shape or displays a different image in response to the user's touch, such a change may be obscured by the user's finger or hand. A user may rarely see when or if a button is pressed, because The user may receive confirmation only after the event, when feedback is provided through a change triggered by the user's selection.

### SUMMARY

In light of the above shortcomings, an aspect of the present disclosure provides an improved GUI having a touchscreen that provides visual confirmation of user input through movement of objects displayed within the GUI, which will not be obscured by the user input itself.

In certain embodiments, the GUI is arranged to display first and second objects located at different positions along an axis extending into the display screen in a three dimensional (3D) space. In response to user input, the first and second objects rotate within the 3D space about a rotation axis such that the first and second objects move relative to one another in the plane of the display screen. The relative movement of the first and second objects in the plane of the display screen in combination with the rotation is intended to give the appearance of tilting of the GUI and to provide a parallax effect, whereby the relative movement is dependent upon the distance from the plane of the display screen to each object and the distance from each object to the rotation axis.

Advantageously, the present invention may retain the clarity of a conventional 2D GUI while exploiting underused 3D rendering power offered by a graphical processing unit (GPU) of a conventional portable apparatus to provide enhanced visual user feedback. Objects may be arranged in the 3D space to simulate movement of the objects as if they were physically touched.

According to another aspect of the disclosure, there is provided a portable apparatus comprising: a display screen; a processor; and an input device operable by a user of the portable apparatus; wherein the processor is configured to control the display screen to display a GUI comprising at least one object in a 3D space; wherein the input device is configured to detect a user input and to provide an input signal to the processor; and wherein the processor is further configured to receive the input signal, to determine an input location within the display screen, to determine a direction of a rotation axis extending through a pivot point within the 3D space transverse to a line extending from the input location to the pivot point, and to cause the at least one object to rotate within the 3D space about the rotation axis.

The rotation of the at least one object about the rotation axis may be dependent upon whether the processor determines that the input signal indicates user selection of an object.

The rotation axis may be parallel to the plane of the display screen or at an acute angle relative to the plane of the display screen.

Rotation of the at least one object may cause portions of the at least one object on the same side of the rotation axis as the input location in the plane of the display screen to move away from the display screen along an axis extending into the display screen.

The processor may be further configured to determine the location of the pivot point within the plane of the display screen such that portions of the at least one object extend in the plane of the display screen in all directions from the pivot point.

The processor may be further configured to determine the location of the pivot point within the plane of the display screen according to the determined input location such that the pivot point is spaced apart from the input location.

The graphical user interface may further comprise at least one object arranged to not rotate about the rotation axis.

The processor may be further configured to determine whether the input signal indicates user selection of the at least one further object, and if so to cause the at least one further object to translate, rotate or change size.

The input device may comprise a touchscreen configured to provide an input signal to the processor indicating the portion of the touchscreen touched by a user.

The processor may be further configured to determine the duration of the user input signal and to cause the rotation of the at least one object to be reversed when the user input signal is ended.

The portable apparatus may further comprise a sensor configured to measure a force applied to the portable apparatus by a user input and to supply a force measurement to the processor, wherein the processor is further configured to determine a speed of rotation of the at least one object according to the force measurement.

The processor may be further configured to cause the at least one object to rotate about a separate rotation axis, to change shape, size, transparency, image or color, or to translate within the 3D space in addition to rotating about the determined rotation axis.

The graphical user interface may comprise first and second objects arranged in the 3D space at different positions along an axis extending into the display screen such that rotation of the first and second objects about the rotation axis causes the first and second objects to move relative to one another in the plane of the display screen.

The pivot point may be located along the axis extending into the display screen between the first and the second object, further along that axis than either the first or second object, between the display screen and the object closest to the display screen, or on the opposite side of the display screen from the first and second objects.

The processor may be further configured to cause relative movement between the first and second objects in the 3D space in response to the received input signal.

The processor may be configured to cause the relative movement of the first and second objects to precede or to follow rotation of the first and second objects.

The processor may be further configured to determine a separate rotation axis for at least one object.

According to another aspect of the disclosure, there is provided a graphical user interface comprising at least one object in a 3D space arranged such that in response to a input location determined by a user input signal, the at least one object rotates within the 3D space about a rotation axis extending through a pivot point within the 3D space transverse to a line extending from the input location to the pivot point.

According to another aspect of the present invention, there is provided a method of operating a portable apparatus comprising a display screen, a processor and an input device operable by a user of the portable apparatus, the method comprising: operating the processor to control the display screen to display a graphical user interface comprising at least one object in a 3D space; operating the input device to detect a user input and to provide an input signal to the processor; and operating the processor to receive the input signal, to determine an input location within the display screen, to determine a direction of a rotation axis extending through a pivot point within the 3D space transverse to a line extending from the input location to the pivot point, and to cause the at least one object to rotate within the 3D space about the rotation axis.

According to a further aspect of the disclosure, there is provided a computer readable medium storing computer program code configured to cause a portable device to implement the method described above.

### BRIEF DESCRIPTION OF THE DRAWINGS

The above and other aspects, features and advantages of certain embodiments of the present invention will be more apparent from the following detailed description taken in conjunction with the accompanying drawings, in which:
Figure 1 is block diagram showing components of a portable apparatus according to a set of exemplary embodiments of the present invention;
Figure 2 illustrates a perspective view of a portable apparatus according to a set of exemplary embodiments of the present invention;
Figure 3 illustrates a screen shot of a GUI in a resting state according to a set of exemplary embodiments of the present invention;
Figure 4 is a screen shot of a transition applied to the GUI of Figure 3 in response to user input according to a set of exemplary embodiments of the present invention;
Figure 5 illustrates the layout of objects forming the GUI of Figure 3 according to a set of exemplary embodiments of the present invention;
Figure 6 illustrates the layout of objects forming the GUI of Figure 4 according to a set of exemplary embodiments of the present invention;
Figure 7 is a graph showing the temporal arrangement of rotational and translational movement forming the transition illustrated in Figure 4 according to a set of exemplary embodiments of the present invention;
Figure 8 is a flowchart illustrating the method of applying a transition to a GUI illustrated in Figure 4 according to a set of exemplary embodiments of the present invention;
Figure 9 is a screen shot of an alternative transition applied to the GUI of Figure 3 according to a set of exemplary embodiments of the present invention;
Figure 10 comprises three partial screen shots showing transitions applied to the toolbar of Figure 3 according to a set of exemplary embodiments of the present invention;
Figure 11 is a screen shot of an alternative transition applied to the GUI of Figure 3 according to a set of exemplary embodiments of the present invention;
Figure 12 is a screen shot of an alternative GUI in a resting state according to an exemplary embodiment of the invention; and
Figure 13 is a screen shot of a transition applied to the GUI of Figure 12 in response to user input according to an exemplary embodiment of the invention.

### DETAILED DESCRIPTION

Exemplary embodiments of the present invention are described with reference to the accompanying drawings in detail. The same reference numbers are used throughout the drawings to refer to the same or like parts. For the purposes of clarity and simplicity, detailed description of well-known functions and structures incorporated herein may be omitted to avoid obscuring the subject matter of the present invention.

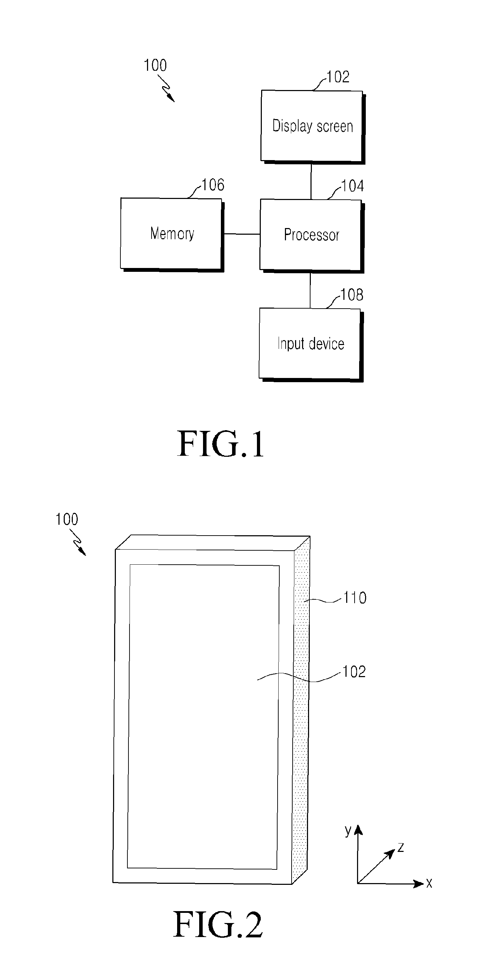

The specification and drawings are to be regarded in an illustrative rather than a restrictive sense in order to help understand the present invention. It should be apparent to those skilled in the art that various modifications and changes can be made thereto without departing from the broader spirit and scope of the invention. Figure 1 is a block diagram illustrating components of a portable apparatus 100, such as a mobile telephone. The portable apparatus 100 includes a display screen 102, a processor 104 configured to display a GUI on the screen 102, a memory 106, and an input device 108 configured to receive user input. The GUI displayed on screen 102 includes at least one object rendered in 3D space. These objects may be in two or three dimensions. In one embodiment, the GUI includes at least first and second 2D objects rendered in a 3D space such that the objects are parallel to a plane of the display screen 102 (an X:Y plane) and spaced apart along an axis extending into the display screen (the Z axis). The display screen X:Y plane and the Z axis extending into the 3D space through the display screen 102 are illustrated in Figure 2, which shows the portable apparatus 100 with the display screen 102 positioned on a first surface of a housing 110. The first and second objects may initially appear from the perspective of the GUI "camera" (and thus the perspective of the user viewing the display screen) as a 2D GUI. The "camera" concept is described in detail below. The elements of the GUI, including the first and second objects, are stored within a memory device 106 within the portable apparatus 100.

Particular embodiments of the invention may be implemented on a portable apparatus 100 which incorporates a touchscreen combining the display screen 102 and the input device 108 within a single component, allowing a user to interact intuitively with the GUI, but the present invention is not limited as such. In particular, the present invention is intended to cover conventional display screens 102 without a touch input and provided in connection with an alternative input mechanism 108 including, but not limited to, one or more buttons, sliders, joysticks or similar physical devices, an audible input mechanism through a microphone, or a gestural input mechanism captured through a camera or video camera, or another type of proximity sensor. One skilled in the art will recognize that the portable apparatus 100 may incorporate further components known from such devices, including communication circuits for communicating with a network or other devices and further input and output devices such as a speaker or microphone. The present invention is also applicable both for conventional 2D display screens and for 3D display screens. Discussion of user input mechanisms, gestures and similar details within the patent specification should not be considered to be in any way limiting on portable devices to which the claimed graphical user interface and techniques may be applied. When reference is made, for instance, to a user selecting an object within a gallery, this is intended to cover a touchscreen embodiment in which the user directly touches the display to select the object. This is further intended to cover an embodiment in which the user enters some other form of input to select an image, for instance by pressing a button to select an object which is at the current focal point of the display screen 102 (in the center for instance).

Embodiments of the present invention utilize the effect of a GUI camera's view angle on the apparent relative motion of a group of objects rendered in 3D space, depending upon the distance of each object from the camera. By positioning at least first and second objects within the 3D space at different positions along a Z axis extending into the 3D space from the display screen, rotational movement of the objects about a rotation axis causes relative movement of the objects in the X:Y plane. This rotational movement and relative X and Y movement may be provided in response to user input, and in particular in response to user input selecting or otherwise interacting with one of the displayed objects. This relative X and Y movement may be referred to as parallax movement, whereby objects that are further away from the rotation axis appear to move further and faster in the X:Y plane. This movement could also be considered to be shifting the GUI camera position relative to objects that are fixed in position in the 3D space. Each object appears to change in scale, position, orientation and skew, such that in combination, rotational movement of the objects is observed. Embodiments of the present invention purposely take advantage of the Z position of objects in the 3D space and the GUI camera position in order to provide visual confirmation of user input.

Advantageously, embodiments of the present invention provide enhanced feedback to a user that user's input has been correctly interpreted. This provides for more intuitive user interaction with the GUI and avoids certain of the problems identified above in connection with the prior art when using a touchscreen, whereby the act of selecting an object may obscure the very object that is to be selected. In the following description of embodiments of the invention, the user input device 108 will be described as a touchscreen, though as discussed above, the present invention is not limited as such. Embodiments of the present invention also provide a visually interesting and distinctive user input mechanism for a GUI. Additionally, prior to receiving user input, the GUI objects may be rendered such that at least two of the objects appear to fall within a single 2D plane parallel to, or within, the plane of the display screen 102, thereby preserving the clarity of a traditional 2D GUI while exploiting the 3D graphical rendering capability of a typical portable apparatus once user input has been received.

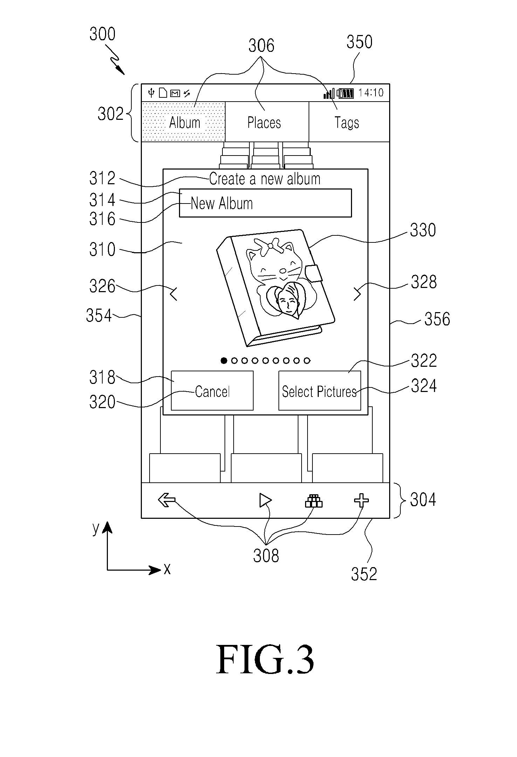

Figure 3 is a screen shot illustrating a plurality of objects rendered in a 3D space to form a GUI 300 in accordance with an exemplary embodiment of the present invention. The screen shot depicts a view of the 3D space presented on the display screen 102 of a portable apparatus 100 in an X:Y plane. Figure 3 illustrates the GUI before a user input has been detected through the touchscreen. The GUI is a dialog box. The GUI comprises a linked set of objects, including at least one of the objects: a main menu bar 302, a tool bar 304, text objects 306 and icons 308 labeling the main menu bar 302 and tool bar 304, a popup background 310, a text object 312 labeling the popup background 310 ("Create a new album"), a text entry box 314, a text object 316 labeling the text entry box 314 ("New album"), a first button 318, a text object 320 labeling the first button 318 ("Cancel"), a second button 322, a text object 324 labeling the second button 322 ("Select Pictures"), first and second direction arrows 326, 328, and a 3D object 330 (for example, a graphical 3D representation of a photo album). Additional objects may be viewed outside of the popup background 310, for instance between the popup background 310 and the toolbar 304. It will be appreciated that there is a large range of alternative or additional objects that could be included within the GUI.

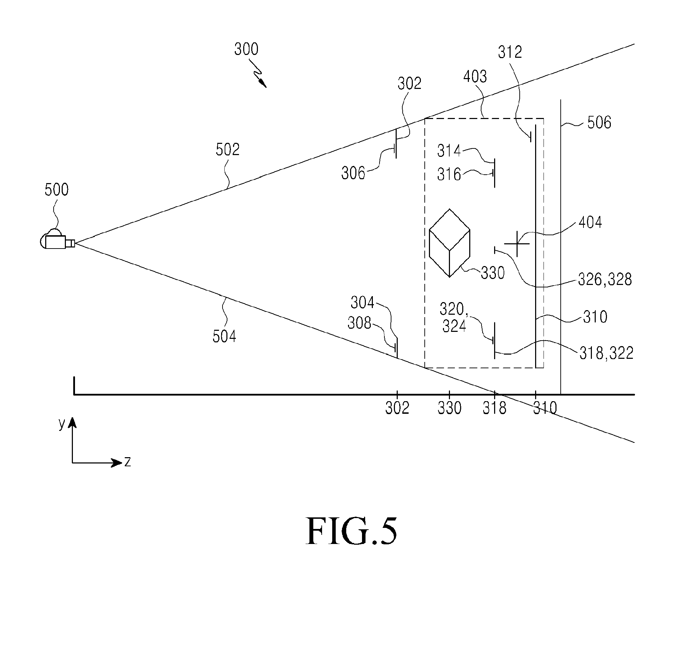

To clarify what is meant by the GUI "camera", Figure 5 illustrates a side view of the 3D space in a Y:Z plane. That is, the view of Figure 5 is of the 3D space from the perspective of a position to the right of the screen shot of Figure 3. It will be appreciated that the illustration of Figure 5 is for explanatory purposes only and is not intended to suggest that the 3D space has any physical, real world presence, nor is it intended to suggest any particular process for constructing the screen shot of Figure 3. Camera 500 looks towards the objects 302 to 330 and has a field of view bounded by lines 502 and 504, which results in the screen shot of Figure 3. It can be seen that each of the objects 302 to 330 are positioned at various positions along the Z axis. This is equivalent to the objects 302 to 330 being at different relative distances from the camera 500. Figure 5 further identifies the deeper GUI objectsas being at a constant distance along the Z axisin layer 506, though it will be appreciated that, in practice, the deeper objects may take a variety of positions along the Z axisThe various text labels described above are illustrated as being slightly closer to the position of the camera 500, though it will be understood that in practice the text labels may assume the same Z position as their associated objects.

Regardless of the position of an object along the Z axis in Figure 5, the position of an object relative to the top and bottom edges 350, 352 of the screen is determined by the distance along the Y axis of the object from the field of view lines 502, 504. It will be appreciated that, alternatively, Figure 5 could be modified to present a view of the 3D space in an X:Z plane, in which case different field of view lines would be evident relating to the left and right edges 354, 356 of the screen.

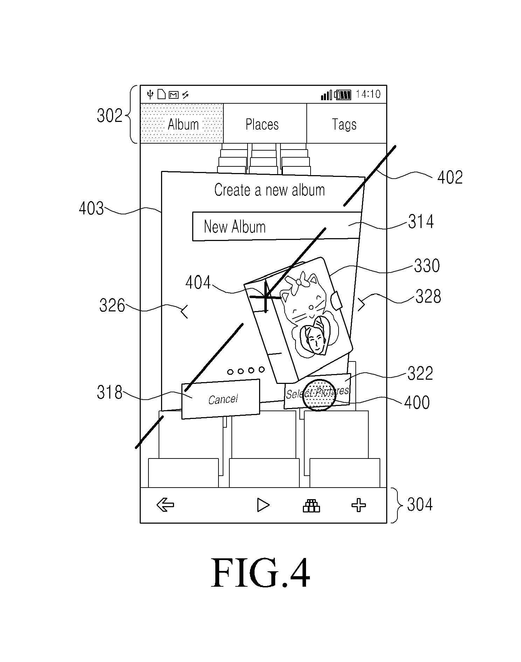

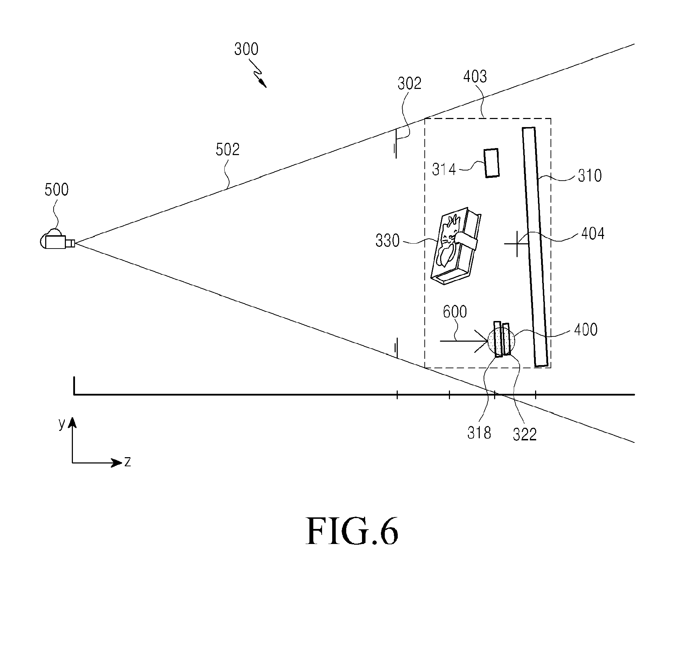

In the embodiments of the present invention illustrated in Figures 3 and 5, the menu and tool bars 302 and 304 are considered to be fixed relative to the position of the camera 500 such that they do not move in response to user input. Similarly, the deeper objects illustrated in layer 506 are considered to be fixed relative to the position of the camera 500 such that they do not move in response to user input. In accordance with these embodiments of the invention, all of the remaining objects illustrated in Figures 3 and 5, shown grouped in Figure 5 by dashed line 403, are considered to form a set of objects collectively forming a dialog box 403, and are arranged to move together in response to user input, as will now be described below in connection with Figures 4 and 6.

With the exception of the 3D object 330 (in this example, the graphical representation of a photo album) all of the objects forming dialog box 403 comprise 2D objects which are arranged parallel to the plane of the display screen (the X:Y plane) and at various positions along the Z axis. As can be seen in Figure 3, the effect is that the dialog box 403 appears to the user as a conventional 2D GUI, and as such retains the advantages of such conventional GUIs in terms of clarity of presentation. Even though the photo album 330 is a rendered 3D object, it too appears to the user as a 2D image absent any rotational movement. Absent any movement of the objects, the user will not recognize that the objects are arranged at different positions along the Z axis. The relative sizes of the objects and the positions of the objects along the Z axis are chosen such that, in combination, they form the appearance of a 2D dialog box laid out in a single plane parallel to the plane of the display screen. Additionally, the dialog box 403 appears to the user as being at the same position along the Z axis as the menu and tool bars 302, 304. The effect is as if there is no depth element to the GUI.

Figures 4 and 6 illustrate the sequence of events that occurs to provide visual confirmation that the processor has correctly identified when a user has selected a displayed object or otherwise interacted with the displayed objects. When a user selects or otherwise interacts with a first object within the dialog box 403, the objects within the dialog box 403 may rotate about a rotation axis. The input device 108 is configured to detect a user input event, which in the case of a touchscreen may comprise a user touching a first location within the display screen. The input device 108 supplies an input signal to the processor 104, which is configured to determine the input location within the display screen that is selected by the user. The input location may comprise an object touched or selected by the user, or in certain embodiments, a particular location within a selected object. In other embodiments, the input may be, for example, a touch and drag or swipe operation performed upon the touch screen, in which case the input location may be determined to be along the swipe path within a particular object within the GUI or at an alternative predetermined input location. In certain embodiments, the processor may determine if the input location corresponds to a selected object before determining whether to rotate the objects within the GUI. A pivot point is defined within the 3D space, and the processor 104 may be configured to determine a rotation axis passing through the pivot point generally transverse to a line extending from the input location to the pivot point.

In an exemplary embodiment of the invention illustrated in Figures 3 to 6, the objects may be arranged to rotate about a single rotation axis. The user input may comprise the user providing a touch input upon a portion of the display screen 102 displaying the "Select Pictures" button 322. The touch input may comprise a tap, or a touch and hold. The touch input is represented in Figure 4 by circle 400. In response to the touch input, the objects of the dialog box 403 are arranged to rotate about a rotation axis 402, shown in Figure 4, which extends through pivot point 404 (identified by a cross in Figures 4 to 6). The objects comprising the dialog box 403 are spread along the Z axis (separated by depth), so each object appears to move differently in relation to each other as each object moves about the pivot point 404, revealing the 3D nature of the GUI. This relative movement is a result of the viewing angle of the GUI camera. Control of the spatial positions of the GUI objects within the 3D space and the location of the pivot point 404 affect the parallax motion of the objects.

Figure 4 shows the motion of the dialog box 403 as the selected object (In this example, the "Select Pictures" button 322) moving away from the display screen along the Z axis and other portions of the dialog box 403 (in particular, the upper left corner of popup background 310) moving towards the display screen along the Z axis. The side view of Figure 6 reveals that, whereas originally buttons 318 and 322 were at the same Z position, the buttons assume different positions along the Z axis in response to the user input.

Figure 6 reveals that the pivot point 404 is located along the Z axis between the original locations of the buttons 318 and 322 and the popup background 310. Figure 4 reveals that the pivot point 404 is at the center of the original position of dialog box 403in the X:Y plane.The rotational movement results from the Z position of selected button 322 increasing (moving away from the display screen, as illustrated by arrow 600) while the relative positions of the objects forming dialog box 403 are preserved. It will be appreciated that this is equivalent to rotational movement of all objects within the dialog box 403 about a rotation axis 402 which passes through the pivot point 404 and extends in an X:Y plane such that it passes through the original X and Y positions of the upper right and lower left corners of popup background 310 (before movement occurs).

Alternatively, if the "Cancel" button 318 is selected the rotation axis may pass through the pivot point 404 and extend in an X:Y plane such that it passes through the original X and Y positions of the lower right and upper left corners of popup background 310 (before movement occurs). More generally, in the embodiment of Figures 3 to 6, the rotation axis passes through the pivot point 404 in the X:Y plane in a direction chosen such that the object selected through user input moves away from the display screen, and at least part of the dialog box 403 moves towards the display screen. Advantageously this gives the appearance of the selected object being directly touched and being pushed away from the user, away from its initial position, with at least part of the remainder of the GUI pivoting about a fixed point. The effect, as can be seen in Figure 4, is that the dialog box tilts towards the part that has been selected or pressed causing significant parallax motion amongst the objects forming the dialog box, which is apparent at positions remote from the selected button 322. This provides a clear visual indication that the button 322 has been selected, even if the button itself is obscured by the user's pointing device or finger.

It will be appreciated that in other embodiments, the rotation axis may vary significantly. The position of the rotation axis relative to a selected object and the remaining objects grouped to rotate about the rotation axis, together with the direction of the rotation axis, will significantly affect the parallax motion between the objects. Apparent X and Y movement as viewed from the GUI camera (that is, as displayed on the display screen) is maximized if the rotation axis lies in an X:Y plane. Parallax motion decreases as the angle between the rotation axis and the Z axis decreases from 90° such that if the rotation axis is parallel to the Z axis, there is no parallax motion between the grouped objects, wherein the only visible motion would be rotation of the whole group of objects within an X:Y plane. For a rotation axis which lies in an X:Y plane or extends at an acute angle relative to an X:Y plane, parallax motion between first and second objects spaced apart along the Z axis is maximized if the rotation axis extends between the objects along the Z axis. However, it will be appreciated that a degree of parallax motion will be visible for any pair of objects rotating about a rotation axis parallel to or at an acute angle to an X:Y plane for any Z position of the rotation axis. This includes cases where the rotation axis is behind the object furthest from the display screen, intersecting at least one of the objects, between the display screen and the object closest to the display screen or at a Z position on the opposite side of the display screen from the objects. Parallax motion is also increased for objects that are further apart in the 3D space. The maximum parallax motion effect can be observed in Figures 4 and 6 in which rotation axis 402 passes between objects 330 and 310 along the Z axis, falls within an X:Y plane and passes between the furthest apart points of the dialog box 403 in the X:Y plane (the upper left and lower right corners of popup background 310).

The motion of the objects described above in connection with Figures 3 to 6 is considered to be caused by the processor 104 causing the objects to rotate within the 3D space as viewed from a static GUI camera 500. It will be appreciated that alternatively this motion could be considered to be caused by at least some of the objects remaining stationary in the 3D space while the GUI camera 500 rotates about the rotation axis. The resulting GUI presented to the user on the display screen is the same.

The embodiments of Figures 3 to 6 consider each object within the dialog box 403 rotating about a single rotation axis 402. However, in alternative embodiments, in order to enhance or minimize parallax motion, at least two of the objects may be arranged to rotate about different rotation axes. This may, for instance, comprise two axes which are parallel to one another in an X:Y plane, although it will be appreciated that any pair of rotation axes may be used that need not be parallel.

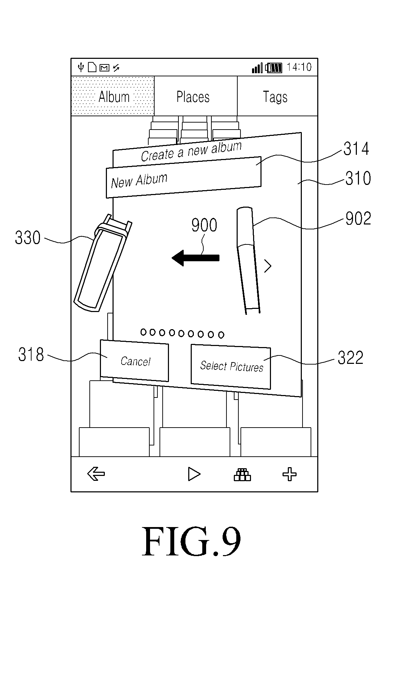

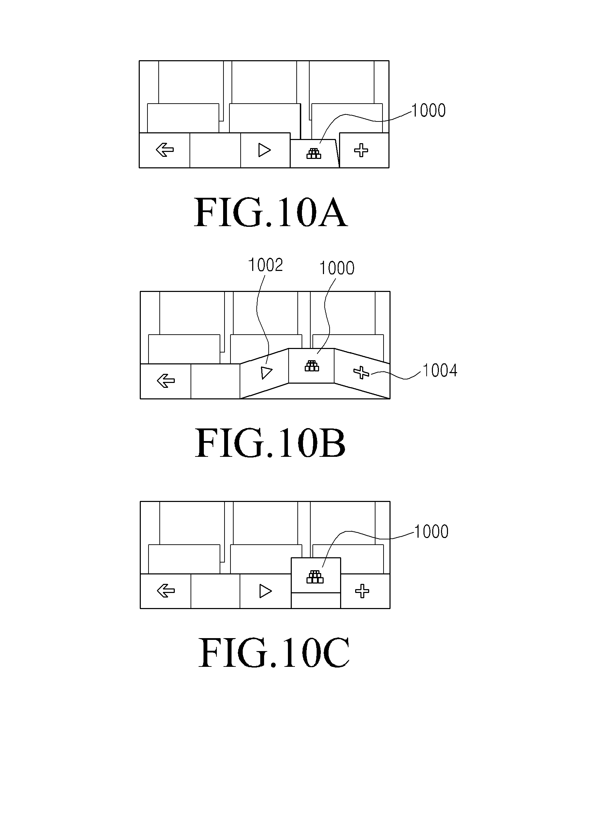

The direction and style of an object's reaction to a touch input (a transition applied to the GUI) is dependent on the position of the touch or swipe on the screen. For instance, the rotation axis may vary according to object which is selected, and so the reaction of other objects will vary accordingly. Figures 9 and 10, described below, relate to an embodiment in which touch and drag or swipe inputs may causes rotation of objects within a GUI. Furthermore, in addition to receiving an input signal through a touchscreen (or a similar input mechanism) the processor may also receive an input signal from an accelerometer within the portable device. The accelerometer may provide a signal indicative of the force applied to the touchscreen by the touch input (that is, the degree to which the whole device moves in response to the touch input). The accelerometer signal may affect the degree or speed of rotation according to the force applied by the user. More generally, the reaction of the GUI to a sensed input may vary the degree of rotation and speed of rotation of some or all of a group of objects arranged to rotate within the 3D space in response to the input signal.

The embodiments described above relate to sensing user input that selects or otherwise relates to an object in a group of objects and to rotational movement of the whole group of objects. It will be appreciated that in other embodiments, the rotational movement may be applied to the whole GUI or to a single object in response to selection of that object or other user input.

In addition to the rotational movement described above, in response to user input, objects may be further arranged to animate and adjust position, change orientation, translate, rotate, scale, and change transparency or color based on detected user input. Furthermore, in the above embodiments, the objects are considered to be either 2D objects positioned generally parallel to the display screen or, in the case of the photo album 330, a single rendered 3D object. In alternative embodiments, the objects may include complex, animated 3D objects included in the GUI structure.

In certain embodiments of the present invention, in addition to the rotational movement described above in response to a touch input such as input 400 selecting the "Select Pictures" button 322, the group of objects may be arranged such that there is relative movement between at least two objects over and above apparent relative movement due to rotation. That is, a first and a second object may move closer together or further apart as well as rotate in unison. Specifically, in Figures 3 to 6, touch input 400 further causes button 322 to move towards the popup background 310 along an axis extending perpendicularly between the two objects. It will be appreciated that initially this axis may be parallel to the Z axis; however, as the dialog box 403 begins to rotate, the axis between button 322 and popup background 310 also rotates forming an increasing angle relative to the Z axis. In certain embodiments of the invention, the movement between the pair of objects may precede the rotational movement of the dialog box 403. The button 322 may additionally reduce in scale (in addition to the apparent change in size from the view point of camera 500 as the button Z position increases) in order to enhance the effect of the button 322 being depressed relative to the popup background 310.

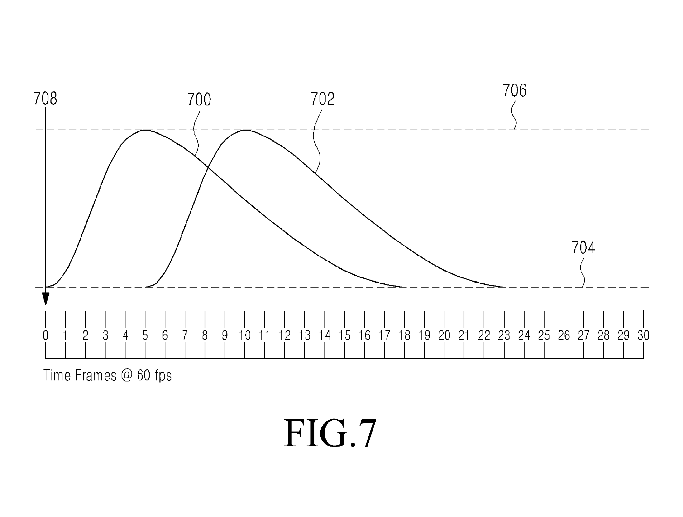

Referring to Figure 7, the extent of translation of button 322 relative to popup background 310 and the rotational movement of the dialog box 403 may be plotted against a time axis, represented by displayed frames along the X axis of the graph. The extent oftranslational or rotational movement is shown for frame numbers increasing from frame zero (the point at which the touch input is received). The frame rate may be 60 frames per second. Figure 7 shows translational movement 700 and rotational movement 702 being plotted against an arbitrary axis which extends from a resting state 704, when the touch input is first received at point 708 (frame zero), to a maximum translation / rotation 706 (Max Q) applied to an object which is reacting to a user input. It can be seen that both translational movement and rotational movement follow an approximately normal curve, though with a slightly faster transition from the resting state 704 to Max Q 706 than for the return to the resting state 704 from Max Q 706. In the embodiment of Figure 7, the translational movement precedes the rotational movement by five frames (equivalent to 0.0833s if the frame rate is 60 frames per second). The offset between translation and rotational movement may vary.

Figure 7 represents the object reactions for a touch input that is of short duration. In response to a touch and hold input, the objects may remain at Max Q until the touch is removed, at which point the translational return to the resting state may precede the rotational movement, or both may return to the resting state at the same time.

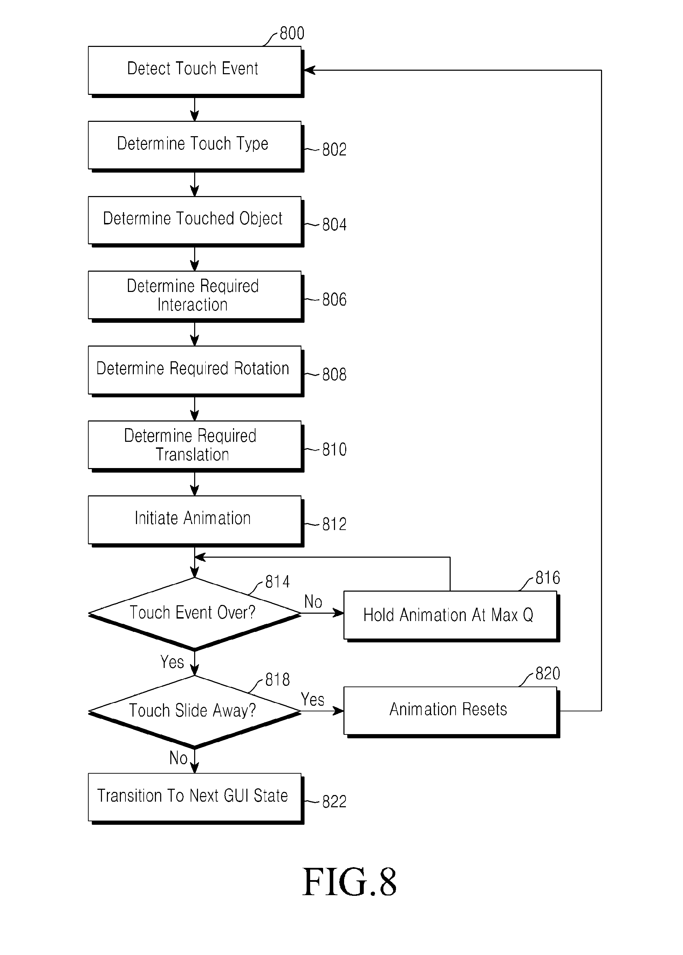

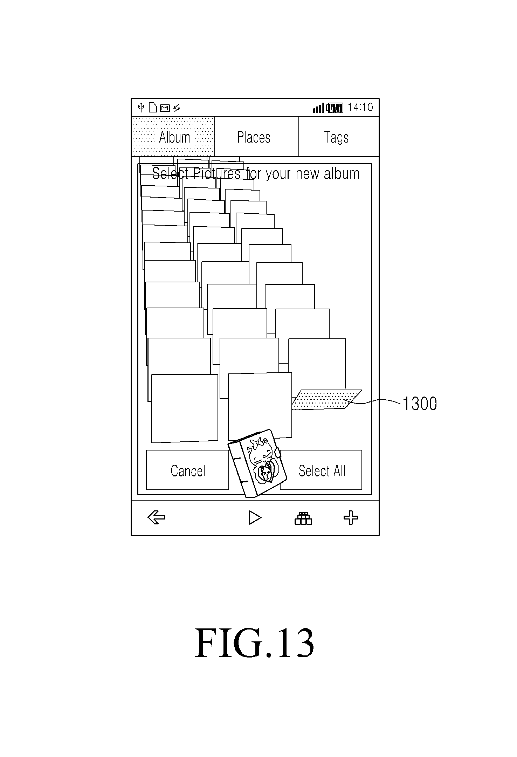

Figure 8 shows a flow chart illustrating the sequence of events that occurs, when a user input is received, to provide visual confirmation that a user input selecting a displayed object, or otherwise interacting with the displayed objects, has been correctly received for the embodiment of the invention illustrated in Figures 3 to 6. Specifically, the flow chart illustrates the operations performed by parts of the portable apparatus illustrated in Figure 1. At step 800, the input device 108 detects a touch input and provides an input signal to the processor 104. The input signal provides sufficient information characterizing the received touch signal (for instance, location and extent of touch upon the display screen 102, duration of touch, movement and speed of movement) to allow the processor 104 to determine the type of touch input at step 802 (for instance, touch and hold, touch and release, touch and drag). At step 804, the processor determines which object which has been touched, selected or otherwise interacted with. At step 806, the processor 104 determines the required form of interaction with the selected object and an associated group of objects forming the whole or part of a GUI. At step 808, the processor 104 determines a required rotation axis for the group of objects and determines a required extent and speed of rotation. At step 810, the processor 104 determines a required translation of the selected object relative to at least one other object. At step 812, the processor 104 initiates the required animation comprising the rotation and translation determined at steps 808 and 810. At step 814, the processor determines whether the touch event has finished. If it is determined that the touch event has not finished then at step 816 the processor 104 holds the animation at Max Q as discussed above in connection with Figure 8, and the process returns to step 814. If at step 814, it is determined that the touch event is over, then at step 818 the processor determines if the touch event is a touch input that initially selects an object and then slides away to a further part of the screen. In the event that it is determined that the touch input is a touch and slide, then at step 820 the processor 104 resets the animation by reversing the rotation and translation of displayed objects. Otherwise, at step 822, the GUI transitions to the next state, for instance as described below in connection with Figures 13 and 14.

Figure 9 illustrates an alternative form of user interaction with the GUI illustrated in Figure 3, according to a further embodiment of the invention. Figure 3 shows a dialog box GUI in a resting state. As illustrated in Figure 9, if the user performs a touch and swipe motion from right to left generally along the path of arrow 900, the processor 104 determines that this is an input selecting a different type of album represented by 3D object 330. In response the dialog box 403 rotates about the pivot point 404 along a Y axis to provide visual confirmation of the swipe input. Additionally, the 3D album representation 330 animates to reveal a new album type 902. The animation may comprise the album representations 330 and 902 translating parallel to the X axis. Alternatively, the path of the album representations may also rotate about the rotation axis such that the album representations are always translating along a path parallel to popup background 310. The album representations may comprise a plurality of different representations which may pass in front of popup background 310, the number of representations passing through the field of view being dependent upon the speed of the swipe input. Each album representation 330 and 902 comprises a 3D object and, due to the rotation of GUI, each 3D object also rotates to reveal a different aspect before the rotation of the GUI returns to the resting state. In a further option, the album representations may additionally spin about their own axes as they pass in front of popup background 310 in addition to rotation of the whole dialog box. There may be a plurality of album representations arranged to move through the dialog box 403 according to the speed and direction of a swipe input. They may be arranged in a loop or, alternatively, when an end of the group is reached, further swiping in the same direction may cause the last album representation to spin about its own axis while remaining at the same position relative to the popup background 310.

Figure 10 illustrates three alternative interactions that may be applied to an icon on the tool bar in response to the processor detecting that the tool bar icon has been selected. In a first interaction (Figure 10A), in response to detecting that icon 1000 has been selected, the icon is animated such that it hinges away from the bottom of the screen. Specifically, the icon comprises a 2D object that initially lies in an X:Y plane. In response to detected user selection, the icon rotates away from the display screen about a rotation axis parallel to the X axis along the bottom edge of the icon. In a second interaction (Figure 10B), the selected icon 1000 moves to a Z position further from the display screen, and neighboring icons 1002 and 1004 are stretched and rotated to remain coupled to icon 1000. In a third interaction (Figure 10C), the selected icon moves upwards parallel to the Y axis.

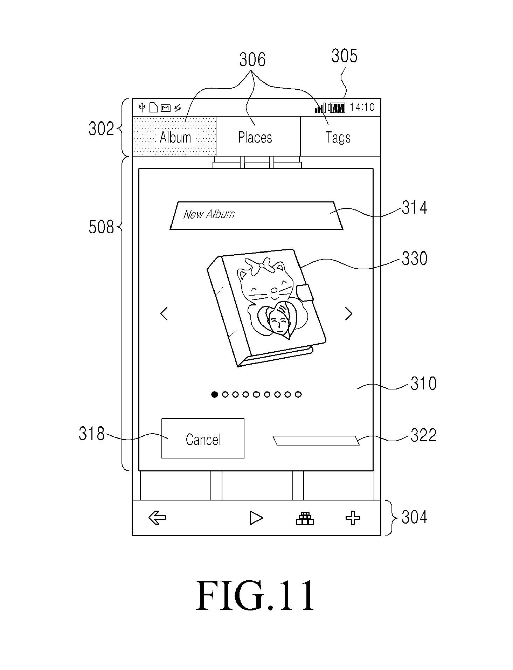

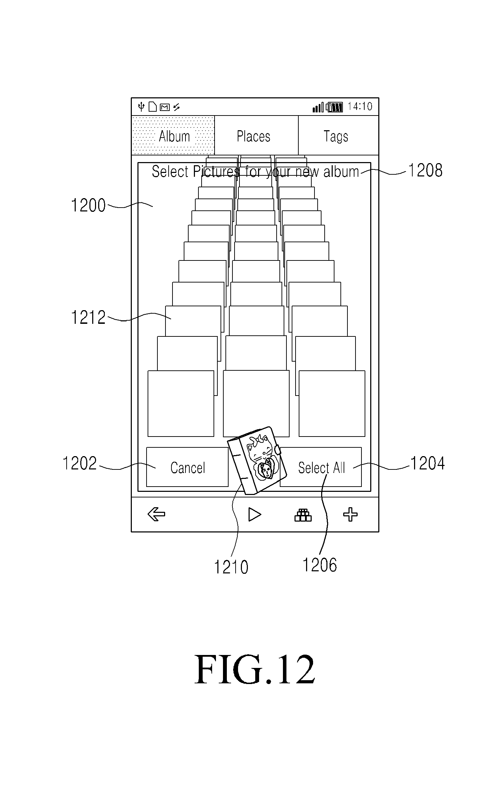

Figure 11 shows a screen shot of the dialog box 403 of Figure 3 part way through transitioning to the next GUI state (step 822 of Figure 8) in response to a detected selection of "Select Pictures" button 322. For instance, in response to a detected selection of button 322, the dialog box 403 rotates back to the resting state, and then further animations are applied to repurpose the screen to allow user selection of pictures, as shown in Figure 12. Popup background 310 expands to fill the available space to form new panel 1200, as shown in Figure 12, and becomes transparent to reveal objects further along the Z axis. The buttons 318 and 322 transition to new positions 1202 and 1204. Button 1204 additionally flips, that is it rotates about a central X axis, to reveal a different text label 1206 ("Select All"). The "New Album" text entry box 314 rotates about a central X axis until it disappears. A new text label 1208 ("Select Pictures for your new album") appears at the top of panel 1200. The 3D album representation 330 shrinks in size and moves to the bottom of the screen to form smaller representation 1210. The screen shot of Figure 12 further shows a plurality of image objects 1212 (only one of which is labeled). The image objects comprise 2D objects that are arranged in rows at offset Y positions and receding along the Z axis.

Figure 13 illustrates how the image object 1300 flips (that is it rotates 180° about a central X axis) when a first one of the image objects 1300 is selected. This confirmation of selection may be reinforced by the addition of a further graphic element such as a check box. Additionally, all ofthe image objects 1200 are arranged to rotate away from the selected object 1300, as illustrated, to give the impression that the group of image objects has been pushed by the user input.

There now follows a technical description of how GUIs are structured according to the above described embodiments of the invention. Each GUI element comprises a 3D object within a 3D scene graph. The GUI elements may alternatively be referred to as actors within the 3D scene graph. It will be appreciated that objects described above as 2D objects are special cases of 3D actors and have zero thickness. Each actor has properties including position, size, skew, rotation, color and scale. Actor properties determine how the actor is rendered by a graphics processor.

In order to be able to perform operations such as rotations on groups of actors, and in order to simplify the processing required to generate even a resting state GUI display, the GUI actors are structured in a hierarchical tree where each actor has exactly one parent actor. A parent actor may have multiple child actors. By structuring the actors in this way, child GUI actors can inherit properties such as position, size, rotation, color and scale from their parent, which advantageously reduces the processing required to render the whole of a GUI. This additionally avoids the need to have to individually specify every property of every actor. By default, the properties of each child actor are set to those of its parent. Furthermore, when a property is changed for a parent, any associate child actors automatically inherit the change, for example tilting or rotating a parent actor automatically applies the same transition to its children.

Actor properties can also be changed dynamically, for instance in response to user input. Rotation of a group of actors forming a GUI, as described above, is an example of a dynamic change to actor properties. Additionally, rotation of a group of actors may be implemented by applying a rotation effect to a parent actor which is then inherited by its child actors. Dynamic property changes may therefore affect individual actors or a hierarchy or portion of a hierarchy of actors. Dynamic changes to properties may be controlled by one or more constraints applied to the properties. For instance a width property of an actor may be constrained to a proportion of a length property of the actor. Constraints may also affect other aspects of an actor, for instance motion and visibility of the actor. Constraints may be applied to individual actors or two or more actors grouped by a parenting relationship.

To further avoid having to specify multiple properties individually, and to avoid having to recalculate multiple properties when a transition is applied to a group of actors, actor properties can be constrained to its own other properties. For example, "width" can be a function of "height." This allows effective property updates as new property values can be copied from other already evaluated properties. Similarly, properties can be constrained relative to the properties of its parent, for example x and y position can be 50% along the parent's width and height resulting in the child actor being positioned in the middle of its parent, and this will continue to be the case even in the event of the parent changing size or animating. Furthermore, an actor's properties or functions applied to an actor's properties can be constrained to any other actor's properties. For example, rotation can be 5 degrees more than that of a neighboring actor. This allows for effective UI element animation updates as the actor properties can be derived from already calculated values.

The hierarchical structure of objects or elements within a GUI will now be described in greater detail. Actors are placed in a hierarchy, which allows actors to inherit properties such as placement, size, color and opacity from their parents, as described above. Actors can be grouped into layers for the purpose of specifying draw order (the order in which a GUI is rendered). A group of actors forming a layer may itself be considered to be an actor. This allows the layers to inherit properties from a parent of the layer such that the properties are applied to all of the actors in the layer. Layers are internally held in a single list which can be ordered by the application writer.

A layout is created by means of constraints which define the spatial relationships between the actors. The relationships can be between actors which share the same parent or between parent and child elements. Some constraint relationships can also be set between individual properties of a single actor or set absolutely for an actor. Constraints can be specified at the time of designing a GUI. The combination of a group of actors and a set of constraints comprises a layout of a GUI. The underlying graphics processing engine of a portable device, such as the processor 104 described above, or a dedicated graphics processor, allows a set of constraints to be animated smoothly. This allows for clean transitions between layouts.

It will be appreciated that embodiments of the present invention can be realized in the form of hardware, software or a combination of hardware and software. In particular, embodiments of the present invention are applicable to any touch enabled device to enhance interactive feedback. This includes mobile telephones, tablet devices, AV equipment and devices such as office copier-printers. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Accordingly, embodiments provide a program comprising code for implementing an apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, characteristics, or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

As described above, although the present invention has been described through the specific matters such as detailed elements, the limited embodiments, and the drawings, they are provided to help overall comprehension of the present invention, and the present invention is not limited to the above-described embodiments. It is obvious to those skilled in the art to which the present invention pertains that various changes and modifications can be made from such descriptions as described above.

Accordingly, the spirit and scope of the present invention should not be limited or determined by the above-described embodiments, and it should be noted that not only the claims which will be described below but also their equivalents fall within the spirit and scope of the present invention.

## Claims

1. A portable apparatus **characterized by**:
a display screen (102);
a processor (104); and
an input device (108) operable by a user of the portable apparatus;
wherein the processor is configured to control the display screen (102) to display a graphical user interface comprising at least one object in a 3D space;
wherein the input device(108) is configured to detect an input and to provide an input signal to the processor (104); and
wherein the processor (104)is further configured to receive the input signal, to determine an input location within the display screen(102), to determine a direction of a rotation axis extending through a pivot point within the 3D space transverse to a line extending from the input location to the pivot point, and to cause the at least one object to rotate within the 3D space about the rotation axis.

2. The portable apparatus of claim 1, **characterized in that** the rotation of the at least one object about the rotation axis is dependent upon whether processor (104)determines that the input signal indicates a selection of an object.

3. The portable apparatus of claim 2, **characterized in that** the rotation axis is parallel to the plane of the display screen(102) or at an acute angle relative to the plane of the display screen(102).

4. The portable apparatus of claim 3, **characterized in that** rotation of the at least one object causes portions of the at least one object on the same side of the rotation axis as the input location in the plane of the display screen (102)to move away from the display screen along an axis extending into the display screen(102).

5. The portable apparatus of claim 4, **characterized in that** the processor (104)is further configured to determine the location of the pivot point within the plane of the display screen such that portions of the at least one object extend in the plane of the display screen in all directions from the pivot point.

6. The portable apparatus of claim 5, **characterized in that** the processor(104) is further configured to determine the location of the pivot point within the plane of the display screen (102)according to the determined input location such that the pivot point is spaced apart from the input location.

7. The portable apparatus of claim 6, **characterized in that** the graphical user interface further comprises at least one object arranged to not rotate about the rotation axis.

8. The portable apparatus of claim 7, **characterized in that** the processor (104) is further arranged to determine whether the input signal indicates a selection of the at least one further object, and if so to cause the at least one further object to translate, rotate or change size.

9. The portable apparatus of claim 8, **characterized in that** the input device (108) comprises a touchscreen configured to provide an input signal to the processor indicating the portion of the touchscreen being touched.

10. The portable apparatus of claim 9, **characterized in that** the processor (104)is further configured to determine a duration of the input signal and to cause the rotation of the at least one object to be reversed when the input signal is ended.

11. The portable apparatus of claim 10, further comprising a sensor configured to measure a force applied to the portable apparatus by the input and to supply a force measurement to the processor(104), wherein the processor (104)is further configured to determine a speed of rotation of the at least one object according to the force measurement.

12. The portable apparatus of claim 11, **characterized in that** the processor (104)is further configured to cause the at least one object to rotate about a separate rotation axis, to change shape, size, transparency, image or color, or to translate within the 3D space in addition to rotation about the determined rotation axis.

13. The portable apparatus of claim 12, **characterized in that** the graphical user interface comprises first and second objects arranged in the 3D space at different positions along an axis extending into the display screen (102) such that rotation of the first and second objects about the rotation axis causes the first and second objects to move relative to one another in the plane of the display screen (102).

14. The portable apparatus of claim 13, **characterized in that** the pivot point is located along the axis extending into the display screen (102) between the first and the second object, further along that axis than either the first or second object, between the display screen (102) and the object closest to the display screen(102), or on the opposite side of the display screen to the first and second objects.

15. A method of operating a portable apparatus comprising a display screen(102), a processor and an input device, **characterized by**:
operating the processing means to control the display screen (102)to display a graphical user interface comprising at least one object in a 3D space;
operating the input device (108)to detect an input and to provide an input signal to the processor; and
operating the processor (104) to receive the input signal, to determine an input location within the display screen(102), to determine a direction of a rotation axis extending through a pivot point within the 3D space transverse to a line extending from the input location to the pivot point, and to cause the at least one object to rotate within the 3D space about the rotation axis.
